# EUROPEAN PATENT SPECIFICATION

(11) **EP 3 089 845 B1**
(45) Date of publication and mention of the grant of the patent: **30.12.2020**
(21) Application number: 14879285.6
(22) Date of filing: 30.12.2014
(51) Int. Cl.: B23Q 1/00, B23Q 1/01, B23Q 1/48, B23Q 1/62

(54) **FIVE-AXIS MACHINING APPARATUS**
FÜNFACHSIGE BEARBEITUNGSVORRICHTUNG
APPAREIL D'USINAGE À CINQ AXES

(30) Priority: 30.12.2013 IN 4099MU2013
(43) Date of publication of application: 09.11.2016
(73) Proprietor: Kelkar, Nitin Narayan, Nasik , Maharashtra 422005 (IN)
(72) Inventor: Kelkar, Nitin Narayan, Nasik , Maharashtra 422005 (IN)
(74) Representative: Richly & Ritschel Patentanwälte PartG mbB
(86) International application number: PCT/IN2014/000802
(87) International publication number: WO 2015/111070

(56) References cited:
- WO-A1-2006/106273
- WO-A1-2012/171367
- CN-U- 202 665 727
- CN-U- 203 171 257
- CN-Y- 201 195 245
- DE-A1- 10 238 372
- DE-A1-102006 026 184
- JP-A- H0 788 737

## Description

### Field of the invention

The present invention relates to a machining apparatus and more particularly, to a five-axis machining apparatus, for example, a CNC machine.

### Background of the invention

The traditional machines for processing of a job are operated manually and hence, the precision of the job depends on the skills and expertise of an operator. To minimize the role of the operators, computer numerical control (herein after "CNC") machines are developed. The CNC machine comprises a computer in which the operator has to merely feed the program of instructions for cutting the job as per the requirements, load the required tools in the machine and rest of the work is done by the computer automatically. Typical CNC machines support translation in two or three axes. Recent advancements in technology have led to the development of five-axis CNC machines.

Presently available five-axis CNC machines are designed to mount A and B axes on a table that moves in X axis. When processing smaller job components such as a watch case, small impeller, jewellery components or dental bridges that have a size of 100 mm or even smaller, the construction of X axis with the moving table becomes a non-essential part and unnecessarily increases the size and weight of the machine thereby making the machine quite bulky. Further, these designs use higher capacity Linear Motion Guides (LMGs) and ball screws for moving the table thereby increasing the cost of construction and that of the machine. WO-2012171367A1 discloses a five-axis machining apparatus comprising: a base member; a support member extending vertically with an opening; a stationary base mounted in X axis on top of the base member; a first moving plate; a second moving plate; a third moving plate having a spindle mounted thereon; a fourth moving frame configured in A axis on the first moving plate and a fifth moving frame mounted in C axis.

Many attempts have been made in the past to design a compact five-axis CNC machine especially for holding and processing smaller job components. However, such attempts have resulted in reducing the strength and rigidity of the CNC machines rendering the machines ineffective for processing of metallic jobs.

Accordingly, there exists a need of a compact five-axis machining apparatus that overcomes the drawbacks of the prior art.

### Object of the invention

An object of the present invention is to provide a compact five-axis machining apparatus that is easily mountable on a table for holding and processing smaller job components.

### Summary of the invention

Accordingly, the present invention provides a five-axis machining apparatus as defined in claim 1. The five-axis machining apparatus comprises a base member, a support member, a stationary base, a first moving plate, a second moving plate, a third moving plate, a fourth moving frame, a fifth moving frame and a controller.

The support member extends vertically from one end of the base member. The stationary base is mounted in X axis on top of the base member. The first moving plate is configured in X axis on the stationary base. The first moving plate is capable of being driven by a first driving mechanism. The second moving plate is mounted in Y axis on an upper portion of the support member. The second moving plate is capable of being driven by a second driving mechanism. The third moving plate is mounted in Z axis on the second moving plate. The third moving plate is capable of being driven by a third driving mechanism.

The third moving plate includes a spindle mounted thereon. The spindle includes a cutting tool configured therein. The spindle undergoes linear vertical movement when the third moving plate is driven by the third driving mechanism. The spindle undergoes linear horizontal movement when the second moving plate is driven by the second driving mechanism.

The fourth moving frame is configured in A axis on the first moving plate. The fourth moving frame is adapted for being driven in response to the movement of the first moving plate to drive a first shaft to move in X axis. The fourth moving frame comprises a fourth driving mechanism configured therein for further driving the first shaft to rotate in A axis. The first shaft is configured on a lower portion of the support member through one end thereof.

The fifth moving frame is mounted in C axis on another end of the first shaft. The fifth moving frame is adapted for moving in X axis in response to the movement of the first moving plate and for swinging in A axis in response to the rotation of the first shaft. The fifth moving frame comprises a second shaft, a chuck and a fifth driving mechanism. The chuck is mounted on the second shaft for holding a job and the fifth driving mechanism drives the second shaft to rotate and in turn rotate the chuck in C axis. The linear movement of the fifth moving frame in X axis, swinging movement of the fifth frame in A axis and rotation of the chuck in C axis results in positioning the job at various locations with respect to the cutting tool.

Typically, the first moving plate, the second moving plate and the third moving plate are configured with any of linear motion (LM) rails, a bush, a dovetail and a roller guide for undergoing smooth rigid motion. Each driving mechanism includes a motor and a driving unit connected thereto. The motors of the first, second and third driving mechanisms are selected from any of a rotary motor and a linear motor. The motors of the fourth and fifth driving mechanisms are rotary motors. The driving units are selected from any of a timing belt and pulley, a harmonic drive, a cycloid drive, a worm wheel gear box, a worm wheel and shaft unit.

The controller for example, a computer numerical control controller is adapted for controlling the movements of the first moving plate, the second moving plate, the third moving plate, the first shaft and the second shaft.

### Brief description of the drawings

The objectives and advantages of the present invention will become apparent from the following description read in accordance with the accompanying drawings wherein,
Figure 1 is an isometric view of a five-axis machining apparatus showing A-axis positioned at zero degree rotation, in accordance with the present invention;
Figure 2 is another isometric view of the five-axis machining apparatus of figure 1 showing A-axis positioned at 45 degree rotation;
Figure 3 shows a schematic view of the five-axis machining apparatus of figure 1;
Figure 4 shows a schematic view of a second moving plate mounted in Y axis of the five-axis machining apparatus of figure 1; and
Figure 5 shows a schematic view of a first moving plate configured in X axis of the five-axis machining apparatus of figure 1.

### Detailed description of the invention

The foregoing objects of the invention are accomplished and the problems and shortcomings associated with the prior art techniques and approaches are overcome by the present invention as described below in the preferred embodiment.

The present invention provides a compact five-axis machining apparatus that is easily mountable on a table for holding and processing smaller job components. The five-axis machining apparatus allows independent as well as simultaneous control of five axes during processing of the jobs.

This present invention is illustrated with reference to the accompanying drawings, throughout which reference numbers indicate corresponding parts in the various figures. These reference numbers are shown in bracket in the following description.

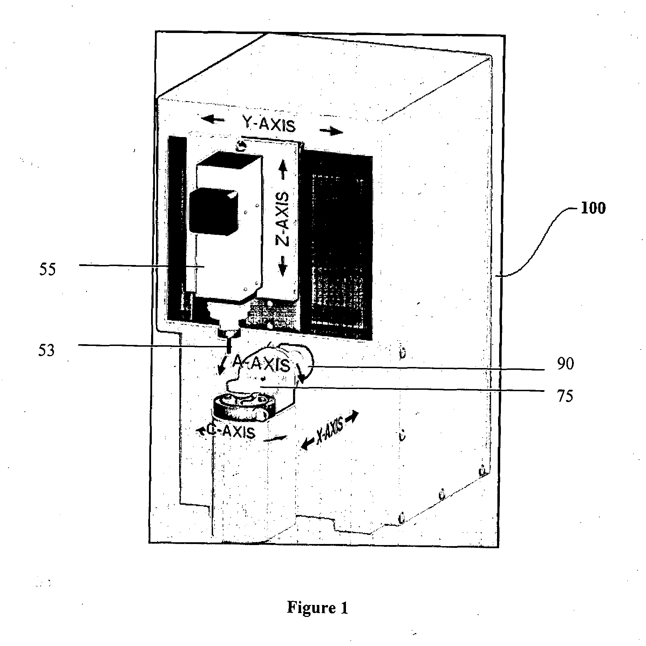

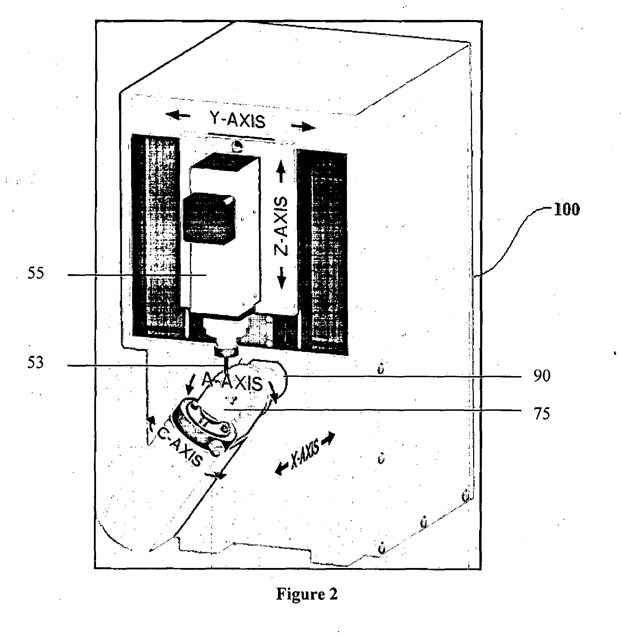

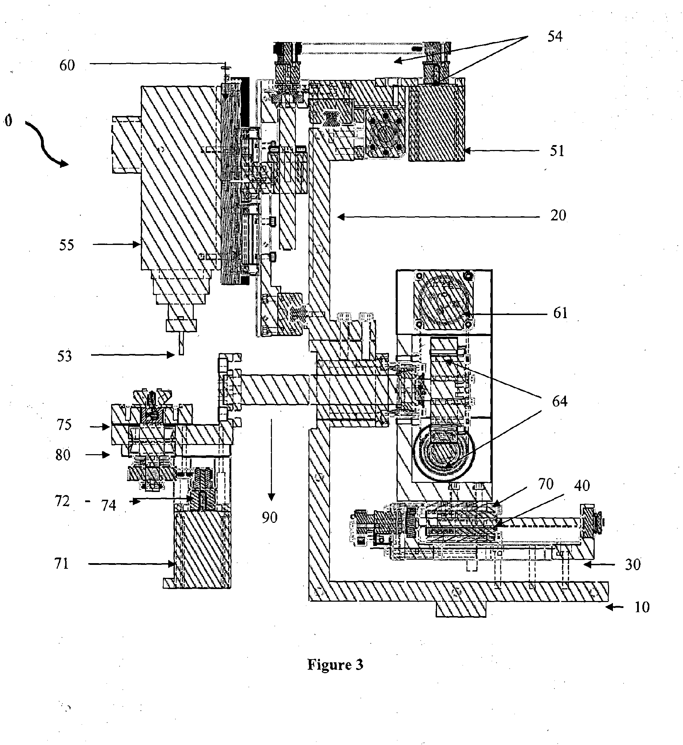

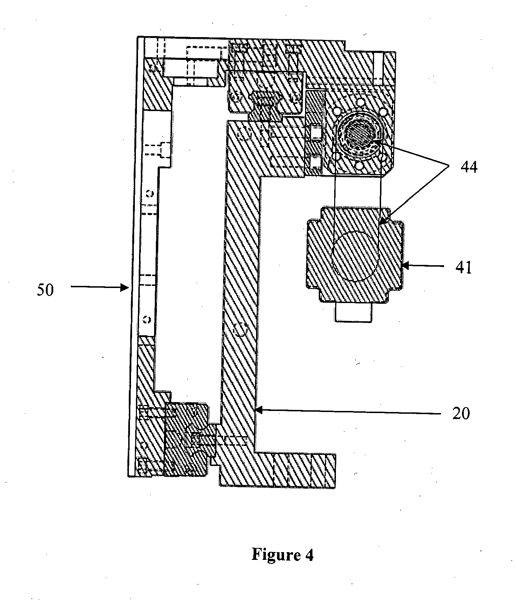

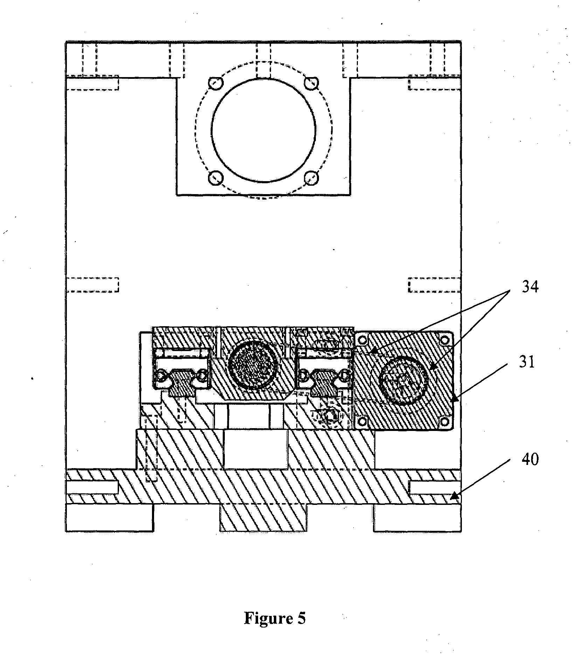

Referring now to figures 1 to 5, a five-axis machining apparatus (100) (hereinafter "the apparatus (100)") in accordance with the present invention is shown. The apparatus (100) operates by allowing movements in X, Y, Z, A and C axes. In a preferred embodiment, the apparatus (100) is a five-axis computer numerical control machine. The apparatus (100) comprises a base member (10), a support member (20), a stationary base (30), a first moving plate (40), a second moving plate (50), a third moving plate (60), a fourth moving frame (70), a fifth moving frame (80) and a controller (not shown).

Specifically, the above mentioned parts of the apparatus (100) are made from metallic components. However, it is understood that the above mentioned parts of the apparatus (100) of varying shapes and dimensions can be made from any suitable materials known in the art. The apparatus (100) is capable of being suitably modified in accordance with various alternate embodiments of the present invention to comprise an automatic tool changer, an automatic lubrication system, a dust collection system, a mist cooling system and the like.

The base member (10) includes the support member (20) extending vertically from one end (not numbered) thereof and the stationary base (30) mounted thereon. Specifically, the stationary base (30) is mounted in X axis on top of the base member (10).

The first moving plate (40) is configured in X axis on the stationary base (30). The first moving plate (40) is capable of being driven by a first driving mechanism (not numbered). The first driving mechanism is positioned between the first moving plate (40) and the stationary base (30). The first driving mechanism includes a first motor (31) and a first driving unit (34) connected thereto. The first motor (31) is selected from any of rotary motors, linear motors and any other types of digital positioning motors known in the art. The rotary motors are selected from but not limited to a group consisting of servo motors, steppers, micro steppers, rotary digital positioning motors and the like. Preferably the first driving unit (34) consists of at least one timing belt and at least one pulley. However, the first driving unit (34) can also be selected from but not limited to a group consisting of a harmonic drive, a cycloid drive, a worm wheel gear box, a worm wheel and shaft unit and the like. In one more embodiment, the first motor (31) can also be connected directly to the ball screws using couplings or any other means for driving the ball screws.

The second moving plate (50) is mounted in Y axis on an upper portion (not numbered) of the support member (20). The second moving plate (50) is capable of being driven by a second driving mechanism (not numbered). The second driving mechanism includes a second motor (41) and a second driving unit (44) connected thereto. The second motor (41) is selected from any of rotary motors, linear motors and any other types of digital positioning motors known in the art. The rotary motors are selected from but not limited to a group consisting of servo motors, steppers, micro steppers, rotary digital positioning motors and the like. Preferably the second driving unit (44) consists of at least one timing belt and at least one pulley. However, the second driving unit (44) can also be selected from but not limited to a group consisting of a harmonic drive, a cycloid drive, a worm wheel gear box, a worm wheel and shaft unit and the like. In one more embodiment, the second motor (41) can also be connected directly to the ball screws using couplings or any other means for driving the ball screws.

The third moving plate (60) is mounted in Z axis on the second moving plate (50) in Y axis perpendicular to the Z axis. The third moving plate (60) is capable of being driven by a third driving mechanism (not numbered). The third driving mechanism includes a third motor (51) and a third driving unit (54) connected thereto. The third motor (51) is selected from any of rotary motors, linear motors and any other types of digital positioning motors known in the art. The rotary motors are selected from but not limited to a group consisting of servo motors, steppers, micro steppers, rotary digital positioning motors and the like. Preferably the third driving unit (54) consists of at least one timing belt and at least one pulley. However, the third driving unit (54) can also be selected from but not limited to a group consisting of a harmonic drive, a cycloid drive, a worm wheel gear box, a worm wheel and shaft unit and the like. In one more embodiment, the third motor (51) can also be connected directly to the ball screws using couplings or any other means for driving the ball screws.

The third moving plate (60) includes a spindle (55) mounted thereon. The spindle (55) includes a cutting tool (53) (herein after 'the tool (53)') configured therein for processing of a work piece / job (not numbered) (herein after 'the job'). In an embodiment, the job is selected from a watch case, an impeller, jewellery bridges, dental bridges and the like. The spindle (55) undergoes linear vertical movement when the third moving plate (60) is driven by the third driving mechanism. The spindle (55) undergoes linear horizontal movement when the second moving plate (50) is driven by the second driving mechanism. The spindle (55) moves linearly for positioning the tool (53) at different locations on the job. In a preferred embodiment, the spindle (55) rotates at 24000 revolutions per minute (RPM) or even at higher RPMs to move the tool (53) independently or simultaneously on the Z-axis and the Y axis. The tool (53) undergoes linear up and down movement on the Z-axis to come in or out of contact with the job. The tool (53) undergoes left and right movements on the Y axis to machine the job.

Furthermore, the first moving plate (40), the second moving plate (50) and the third moving plate (60) on either side (not numbered) are configured with linear motion rail (not numbered) (herein after 'the LM rails') for undergoing smooth rigid motion. In alternate embodiments of the present invention, the smooth rigid motion of the plates (40, 50, and 60) can be achieved by a bush, a dovetail, a roller guide or any other suitable means known in the art.

The fourth moving frame (70) is configured in A axis on the first moving plate (40) that in turn is configured in X axis. The fourth moving frame (70) is capable of being driven in X axis in response to the movement of the first moving plate (40) in X axis upon being driven by the first driving mechanism. The movement of the fourth moving frame (70) drives a first shaft (90) to move in X axis. The first shaft (90) through one end (not numbered) is configured on a lower portion (not numbered) of the support member (20) to undergo in and out linear movement in X axis.

The fourth moving frame (70) comprises a fourth driving mechanism (not numbered). The fourth driving mechanism includes a fourth motor (61) and a fourth driving unit (64). The fourth motor (61) is selected from any of rotary motors and any other types of digital positioning motors known in the art. The rotary motors are selected from but not limited to a group consisting of servo motors, steppers, micro steppers, rotary digital positioning motors and the like. Preferably the fourth driving unit (64) is a worm wheel and shaft unit. However, it is understood that the fourth driving unit (64) can also be selected from but not limited to a group consisting of a harmonic drive, a cycloid drive, a worm wheel gear box, a timing belt and pulley and the like.

The fourth driving mechanism of the fourth moving frame (70) further drives the first shaft (90) to rotate in A axis. Thus, the first shaft (90) is capable of undergoing simultaneous as well as independent movements on the A and X axes.

The fifth moving frame (80) is mounted in C axis on another end of the first shaft (90). The fifth moving frame (80) is capable of being driven in X axis as well as in A axis. The fifth moving frame (80) moves in X axis in response to the movement of the first moving plate (40) by the first driving mechanism. The fifth moving frame (80) swings in A axis in response to the rotation of the first shaft (90) in A axis by the fourth driving mechanism. The fifth moving frame (80) comprises a second shaft (72), a chuck (75) and a fifth driving mechanism (not numbered). The chuck (75) is adapted for holding the job. The chuck (75) is mounted on an end (not numbered) of the second shaft (72). The second shaft (72) is capable of being driven by the fifth driving mechanism. The second shaft (72) upon being driven rotates causing the chuck (75) to rotate in C axis. Thus, the job on the chuck (75) is positioned at various locations with respect to the tool (53) due to the linear movement of the fifth moving frame (80) in X axis, swinging movement of the fifth frame (80) in A axis as well as due to the rotation of the second shaft (72) and thus of the chuck (75) in C axis.

The fifth driving mechanism includes a fifth motor (71) and a fifth driving unit (74). The fifth motor (71) is selected from any of rotary motors and any other types of digital positioning motors known in the art. The rotary motors are selected from but not limited to a group consisting of servo motors, steppers, micro steppers, rotary digital positioning motors and the like. Preferably the fifth driving unit (74) consists of at least one timing belt and at least one pulley. However, it is understood that the fifth driving unit (74) can also be selected from but not limited to a group consisting of a harmonic drive, a cycloid drive, a worm wheel gear box, a worm wheel and shaft unit and the like. The selection of the type of the driving units (34, 44, 54, 64 and 74) of each driving mechanism depends on the job material to be cut as well as on the accuracy required.

The controller is configured for controlling the movements of the first moving plate (40), the second moving plate (50), the third moving plate (60), the first shaft (90) and the second shaft. In a preferred embodiment, the controller is a computer numerical control (CNC) controller.

Referring again to figures 1 to 5, a machining operation of the apparatus (100) is illustrated in accordance with the present invention. The machining operations result in movement of the tool (53) as well as of the job.

**Movement of the tool (53):** When the second driving mechanism drives the second moving plate (50) in Y axis, the second moving plate (50) moves by sliding on the LM rails and causes the spindle (55) to move the tool (53) horizontally in Y axis for machining the job.

When the third driving mechanism drives the third moving plate (60) in Z axis, the third moving plate (60) moves by sliding on the LM rails and causes the spindle (55) to move the tool (53) vertically in Z axis, wherein the tool (53) undergoes downward vertical movement to come in contact with the job and undergoes upward vertical movement to go out of contact from the job. Thus, the tool (53) undergoes linear vertical movement in Z axis as well as linear horizontal movement in Y axis to position over the job and to machine the job.

**Movement of the job:** When the first driving mechanism drives the first moving plate (40) in X axis, the first moving plate (40) moves on the stationary base (30) by sliding on the LM rails that in turn drives the fourth moving frame (70) in X axis thereby causing the first shaft (90) to move linearly in and out in X axis. Further, the movement of the first shaft (90) in X axis results in movement of the fifth moving frame (80) mounted at the end of the first shaft (90). The movement of the fifth moving frame (90) in X axis moves the job held in the chuck (75).

When the fourth driving mechanism rotates the first shaft (90) in A axis, the fifth moving frame (80) starts swinging in A axis to position the job with respect to the tool (53).

When the fifth driving mechanism drives the second shaft (72) in C axis, the second shaft (72) rotates causing the chuck (75) to undergo rotary motion in C axis thereby positioning the job with respect to the tool (53) for processing thereof.

### Advantages of the invention

1. The apparatus (100) is designed such that the first shaft (90) holds three (A, C and X) axes resulting in a reduced size without compromising on rigidity that is required for processing metallic job components.
2. The apparatus (100) is small enough to be easily mountable on a desktop or top of a table.
3. The apparatus (100) comfortably holds the jobs of smaller size.
4. The apparatus (100) allows independent as well as simultaneous control of X, Y, Z, A and C axes.
5. The apparatus (100) is cost effective compared to other 5-axis machines.

The foregoing objects of the invention are accomplished and the problems and shortcomings associated with prior art techniques and approaches are overcome by the present invention described in the present embodiment. Detailed descriptions of the preferred embodiment are provided herein; however, it is, understood that the present invention may be embodied in various forms as defined by the claims.

## Claims

1. A five-axis machining apparatus (100) comprising:
a base member (10);
a support member (20) extending vertically from one end of the base member (10) and provided at one end portion of its lower portion with an opening for a shaft;
a stationary base (30) mounted in X axis on top of the base member (10);
a first moving plate (40) configured in X axis on the stationary base (30), the first moving plate (40) capable of being driven by a first driving mechanism;
a second moving plate (50) mounted in Y axis on an upper portion of the support member (20), the second moving plate (50) capable of being driven by a second driving mechanism;
a third moving plate (60) mounted in Z axis on the second moving plate (50), the third moving plate (60) capable of being driven by a third driving mechanism, the third moving plate (60) having a spindle (55) mounted thereon, the spindle (55) includes a cutting tool (53) configured therein;
a fourth moving frame (70) configured in A axis on the first moving plate (40) and arranged on one side of the vertically extending support member (20), the fourth moving frame (70) adapted for being driven in response to the movement of the first moving plate (40) to drive a first shaft (90), which penetrates through said opening, to move in X axis relative to the support member (20) while the fourth moving frame (70) remains on said one side of the vertically extending support member (20), the fourth moving frame (70) comprising a fourth driving mechanism configured therein for further driving the first shaft (90) to rotate in A axis, the first shaft (90) being configured on a lower portion of the support member (20) through one end thereof;
a fifth moving frame (80) mounted in C axis on another end of the first shaft (90) for moving in X axis in response to the movement of the first moving plate (40) and for swinging in A axis in response to the rotation of the first shaft (90), the fifth moving frame (80) having a second shaft (72), a chuck (75) mounted on the second shaft (72) for holding a job and a fifth driving mechanism driving the second shaft (72) to rotate and in turn rotate the chuck (75) in C axis, wherein the linear movement of the fifth moving frame (80) in X axis, swinging movement of the fifth frame (80) in A axis and rotation of the chuck (75) in C axis results in positioning the job at various locations with respect to the cutting tool (53); and
a controller for controlling the movements of the first moving plate (40), the second moving plate (50), the third moving plate (60), the first shaft (90) and the second shaft (72).

2. The five-axis machining apparatus (100) as claimed in claim 1, wherein the controller is a computer numerical control controller.

3. The five-axis machining apparatus (100) as claimed in claim 1, wherein the first moving plate (40), the second moving plate (50) and the third moving plate (60) are configured with any of one linear motion rails, a bush, a dovetail, a roller guide for undergoing smooth rigid motion.

4. The five-axis machining apparatus (100) as claimed in claim 1, wherein the driving mechanisms include motors (31, 41, 51, 61 and 71) and a driving unit (34, 44, 54, 64 and 74) connected thereto.

5. The five-axis machining apparatus (100) as claimed in claim 1, wherein the motors (31, 41 and 51) are selected from any of a rotary motor and a linear motor.

6. The five-axis machining apparatus (100) as claimed in claim 1, wherein the motors (61 and 71) are rotary motors.

7. The five-axis machining apparatus (100) as claimed in claim 1, wherein the driving units (34, 44, 54, 64 and 74) are selected from any of a timing belt and pulley, a harmonic drive, a cycloid drive, a worm wheel gear box, a worm wheel and shaft unit.

8. The five-axis machining apparatus (100) as claimed in claim 1, wherein the spindle (55) undergoes linear vertical movement when the third moving plate (60) is driven by the third driving mechanism.

9. The five-axis machining apparatus (100) as claimed in claim 1, wherein the spindle (55) undergoes linear horizontal movement when the second moving plate (50) is driven by the second driving mechanism.

## Patentansprüche

1. Ein Der fünfachsige Bearbeitungsapparat (100), aufweisend:
ein Basiselement (10);
ein Stützelement (20), das sich vertikal von einem Ende des Basiselements (10) erstreckt und an einem Endabschnitt seines unteren Abschnitts mit einer Öffnung für eine Welle versehen ist;
eine stationäre Basis (30), die in der X-Achse oben auf dem Basiselement (10) montiert ist;
eine erste bewegliche Platte (40), die in der X-Achse auf der stationären Basis (30) konfiguriert ist, wobei die erste bewegliche Platte (40) von einem ersten Antriebsmechanismus angetrieben werden kann;
eine zweite bewegliche Platte (50), die in der Y-Achse an einem oberen Abschnitt des Stützelements (20) montiert ist, wobei die zweite bewegliche Platte (50) durch einen zweiten Antriebsmechanismus angetrieben werden kann;
eine dritte bewegliche Platte (60), die in der Z-Achse auf der zweiten beweglichen Platte (50) montiert ist, wobei die dritte bewegliche Platte (60) durch einen dritten Antriebsmechanismus angetrieben werden kann, wobei die dritte bewegliche Platte (60) eine aufmontierte Spindel (55) aufweist, wobei die Spindel (55) ein darin konfiguriertes Schneidwerkzeug (53) enthält;
einen vierten beweglichen Rahmen (70), der in einer A-Achse auf der ersten beweglichen Platte (40) konfiguriert ist und auf einer Seite des sich vertikal erstreckenden Stützelements (20) angeordnet ist, wobei der vierte bewegliche Rahmen (70) so ausgelegt ist, dass er als Reaktion auf die Bewegung der ersten beweglichen Platte (40) angetrieben wird, um eine erste Welle (90) anzutreiben, die durch die Öffnung dringt, um sich in der X-Achse relativ zu dem Stützelement (20) zu bewegen, während der vierte bewegliche Rahmen (70) auf der einen Seite des sich vertikal erstreckenden Stützelements (20) bleibt,
wobei der vierte bewegliche Rahmen (70) einen vierten Antriebsmechanismus umfasst, der darin konfiguriert ist, um die erste Welle (90) zur Drehung in der A-Achse weiter anzutreiben, wobei die erste Welle (90) an einem unteren Abschnitt des Stützelements (20) durch ein Ende davon konfiguriert ist;
einen fünften beweglichen Rahmen (80), der in einer C-Achse an einem anderen Ende der ersten Welle (90) montiert ist zum Antreiben in der X-Achse als Reaktion auf die Bewegung der ersten beweglichen Platte (40) und zum Schwingen in der A-Achse als Reaktion auf die Drehung der ersten Welle (90), wobei der fünfte bewegliche Rahmen (80) eine zweite Welle (72) aufweist, ein Spannfutter (75), das auf der zweiten Welle (72) montiert ist, um ein Arbeitsstück zu halten, und einen fünften Antriebsmechanismus, der die zweite Welle (72) zur Rotation antreibt, um das Spannfutter (75) in der C-Achse zu drehen, wobei die lineare Bewegung des fünften beweglichen Rahmens (80) in der X-Achse, die Schwingbewegung des fünften Rahmens (80) in der A-Achse und die Drehung des Spannfutters (75) in der C-Achse zu einer Positionierung des Arbeitsstücks an verschiedenen Orten in Bezug auf das Schneidwerkzeug (53) führt; und
eine Steuerung zum Steuern der Bewegungen der ersten beweglichen Platte (40), der zweiten beweglichen Platte (50), der dritten beweglichen Platte (60), der ersten Welle (90) und der zweiten Welle (72).

2. Der fünfachsige Bearbeitungsapparat (100) nach Anspruch 1, wobei die Steuerung eine computernumerische Kontrollsteuerung ist.

3. Der fünfachsige Bearbeitungsapparat (100) nach Anspruch 1, wobei die erste bewegliche Platte (40), die zweite bewegliche Platte (50) und die dritte bewegliche Platte (60) mit einer linearen Bewegungsschiene und/oder einer Buchse und/oder einem Schwalbenschwanz und/oder einer Rollenführung konfiguriert sind, um eine glatte, starre Bewegung durchzuführen.

4. Der fünfachsige Bearbeitungsapparat (100) nach Anspruch 1, wobei die Antriebsmechanismen Motoren (31, 41, 51, 61 und 71) und eine mit diesen verbundene Antriebseinheit (34, 44, 54, 64 und 74) aufweisen.

5. Der fünfachsige Bearbeitungsapparat (100) nach Anspruch 1, wobei die Motoren (31, 41 und 51) als Rotationsmotor und/oder als Linearmotor ausgebildet sind.

6. Der fünfachsige Bearbeitungsapparat (100) nach Anspruch 1, wobei die Motoren (61 und 71) Rotationsmotoren sind.

7. Der fünfachsige Bearbeitungsapparat (100) nach Anspruch 1, wobei die Antriebseinheiten (34, 44, 54, 64 und 74) als Zahnriemen und einer Riemenscheibe und/oder als Gleitkeilgetriebe und/oder als Cycloidgetriebe und/oder als Schneckenradgetriebe und/oder als Schneckenrad- und Welleneinheit ausgebildet sind.

8. Der fünfachsige Bearbeitungsapparat (100) nach Anspruch 1, wobei die Spindel (55) eine lineare Vertikalbewegung erfährt, wenn die dritte bewegliche Platte (60) durch den dritten Antriebsmechanismus angetrieben wird.

9. Der fünfachsige Bearbeitungsapparat (100) nach Anspruch 1, wobei die Spindel (55) eine lineare horizontale Bewegung erfährt, wenn die zweite bewegliche Platte (50) durch den zweiten Antriebsmechanismus angetrieben wird.

## Revendications

1. Appareil d'usinage à cinq axes (100) comprenant :
un élément de base (10) ;
un élément de support (20) s'étendant verticalement depuis une extrémité de l'élément de base (10) et pourvu à une partie d'extrémité de sa partie inférieure avec une ouverture pour un arbre ;
une base fixe (30) montée dans l'axe X sur le dessus de l'élément de base (10) ;
une première plaque mobile (40) configurée dans l'axe X sur la base fixe (30), la première plaque mobile (40) pouvant être entraînée par un premier mécanisme d'entraînement ;
une deuxième plaque mobile (50) montée dans l'axe Y sur une partie supérieure de l'élément de support (20), la deuxième plaque mobile (50) pouvant être entraînée par un deuxième mécanisme d'entraînement ;
une troisième plaque mobile (60) montée dans l'axe Z sur la deuxième plaque mobile (50), la troisième plaque mobile (60) pouvant être entraînée par un troisième mécanisme d'entraînement, la troisième plaque mobile (60) ayant une broche (55) montée sur celle-ci, la broche (55) comportant un outil de découpe (53) configuré à l'intérieur de celle-ci ;
un quatrième châssis mobile (70) configuré dans l'axe A sur la première plaque mobile (40) et disposé sur un côté de l'élément de support s'étendant verticalement (20), le quatrième châssis mobile (70) étant adapté pour être entraîné en réponse au mouvement de la première plaque mobile (40) afin d'entraîner un premier arbre (90), qui pénètre à travers ladite ouverture, pour se déplacer dans l'axe X par rapport à l'élément de support (20) tandis que le quatrième châssis mobile (70) reste sur ledit un côté de l'élément de support s'étendant verticalement (20), le quatrième châssis mobile (70) comprenant un quatrième mécanisme d'entraînement configuré dans celui-ci pour entraîner en outre le premier arbre (90) en rotation dans l'axe A, le premier arbre (90) étant configuré sur une partie inférieure de l'élément de support (20) par une extrémité de celui-ci ;
un cinquième châssis mobile (80) monté dans l'axe C sur une autre extrémité du premier arbre (90) pour se déplacer dans l'axe X en réponse au mouvement de la première plaque mobile (40) et pour osciller dans l'axe A en réponse à la rotation du premier arbre (90), le cinquième châssis mobile (80) ayant un second arbre (72), un mandrin (75) monté sur le second arbre (72) pour maintenir une pièce et un cinquième mécanisme d'entraînement entraînant le second arbre (72) à tourner et à son tour faire tourner le mandrin (75) dans l'axe C, le mouvement linéaire du cinquième châssis mobile (80) sur l'axe X, le mouvement d'oscillation du cinquième châssis (80) dans l'axe A et la rotation du mandrin (75) dans l'axe C entraînant le positionnement de la pièce à divers emplacements par rapport à l'outil de découpe (53) ; et
un dispositif de commande pour commander les mouvements de la première plaque mobile (40), de la deuxième plaque mobile (50), de la troisième plaque mobile (60), du premier arbre (90) et du second arbre (72).

2. Appareil d'usinage à cinq axes (100) selon la revendication 1, dans lequel le dispositif de commande est un dispositif de commande à commande numérique par ordinateur.

3. Appareil d'usinage à cinq axes (100) selon la revendication 1, dans lequel la première plaque mobile (40), la deuxième plaque mobile (50) et la troisième plaque mobile (60) sont configurées avec l'un quelconque des rails à mouvement linéaire, une douille, une queue d'aronde, un guide à rouleaux pour subir un mouvement rigide et lisse.

4. Appareil d'usinage à cinq axes (100) selon la revendication 1, dans lequel les mécanismes d'entraînement comportent des moteurs (31, 41, 51, 61 et 71) et une unité d'entraînement (34, 44, 54, 64 et 74) qui y sont reliés.

5. Appareil d'usinage à cinq axes (100) selon la revendication 1, dans lequel les moteurs (31, 41 et 51) sont choisis parmi l'un quelconque d'un moteur rotatif et d'un moteur linéaire.

6. Appareil d'usinage à cinq axes (100) selon la revendication 1, dans lequel les moteurs (61 et 71) sont des moteurs rotatifs.

7. Appareil d'usinage à cinq axes (100) selon la revendication 1, dans lequel les unités d'entraînement (34, 44, 54, 64 et 74) sont choisies parmi une courroie et une poulie de synchronisation, un réducteur planétaire, un entraînement cycloïdal, un réducteur de roue à vis sans fin, une unité d'arbre et de roue à vis sans fin.

8. Appareil d'usinage à cinq axes (100) selon la revendication 1, dans lequel la broche (55) subit un mouvement vertical linéaire lorsque la troisième plaque mobile (60) est entraînée par le troisième mécanisme d'entraînement.

9. Appareil d'usinage à cinq axes (100) selon la revendication 1, dans lequel la broche (55) subit un mouvement horizontal linéaire lorsque la deuxième plaque mobile (50) est entraînée par le deuxième mécanisme d'entraînement.
